(19) Europäisches Patentamt
European Patent Office
Office européen des brevets

(11) **EP 4 067 036 A1**

(12) # EUROPEAN PATENT APPLICATION
published in accordance with Art. 153(4) EPC

(43) Date of publication:
**05.10.2022 Bulletin 2022/40**

(21) Application number: **20893911.6**

(22) Date of filing: **12.11.2020**

(51) International Patent Classification (IPC):
***B29B 11/16*** *(2006.01)*

(52) Cooperative Patent Classification (CPC):
**B29B 11/16**

(86) International application number:
**PCT/JP2020/042178**

(87) International publication number:
**WO 2021/106585 (03.06.2021 Gazette 2021/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.11.2019 JP 2019212312**

(71) Applicant: **DIC Corporation**
**Tokyo 174-8520 (JP)**

(72) Inventors:
• **HITOMI, Kazutoshi**
**Takaishi-shi, Osaka 592-0001 (JP)**
• **NAGATA, Kouji**
**Takaishi-shi, Osaka 592-0001 (JP)**

(74) Representative: **TBK**
**Bavariaring 4-6**
**80336 München (DE)**

(54) **METHOD FOR PRODUCING SHEET MOLDING COMPOUND AND MOLDED PRODUCT**

(57) Provided is a method for producing a sheet molding compound, including impregnating a resin composition into carbon fibers. The viscosity at 25°C of the resin composition is 300 to 20000 mPa·s, the temperature Tc of the carbon fibers is 15°C to 115°C when sandwiched between the resin compositions on carrier films disposed on upper and lower sides, and the content of the carbon fibers in the sheet molding compound is 35% to 80% by mass. The method for producing a sheet molding compound can produce SMC having an excellent impregnation property into carbon fibers regardless of the carbon fiber content and thus can be preferably used for exteriors, structures, and the like of an automotive member, a railroad vehicle member, an aerospace vehicle member, a ship member, a housing equipment member, a sport member, a light vehicle member, a civil engineering and construction member, an OA equipment, etc.

EP 4 067 036 A1

**Description**

Technical Field

The present invention relates to methods for producing a sheet molding compound and for producing a molded product.

Background Art

The so-called FRP produced by reinforcing a thermosetting resin with a fiber reinforcing material is used in many fields such as industrial components, housing members, and automotive members. Further, a fiber-reinforced resin composite material produced by reinforcing a thermosetting resin, such as an epoxy resin, an unsaturated polyester resin, or the like, with carbon fibers serving as a fiber reinforcing material has a noticeable characteristic that it has excellent heat resistance and mechanical strength while being lightweight, and the use for various structural applications is expanded. In addition, a sheet molding compound (may be abbreviated as "SMC" hereinafter) is widely used because it uses discontinuous fibers as a fiber reinforcing material and thus, as compared with continuous fibers, it has a wide application range of molded shapes and has productivity and a wide range of design applications due to the ability to reuse end materials and to insert different material members.

For the purpose of improving the appearance and strength of a molded product produced from such SMC, improvement in moldability and impregnation property of SMC is examined (refer to, for example, Patent Literature 1). However, a method for producing SMC using a heated pressure roller has the problem of an unsatisfactory impregnation property in producing at a high resin viscosity and a high reinforcing fiber content.

Citation List

Patent Literature

PTL 1: Japanese Unexamined Patent Application Publication No. 2004-35714

Summary of Invention

Technical Problem

A problem to be solved by the present invention is to provide a method for producing SMC having the excellent impregnation property into carbon fibers regardless of the carbon fiber content.

Solution to Problem

The inventors found that the problem described above can be solved by a method for producing a sheet molding compound produced by impregnating a specific resin composition into carbon fibers under specific conditioning, leading to the achievement of the present invention.

That is, the present invention relates to a method for producing a sheet molding compound including impregnating a resin composition into carbon fibers. The method for producing a sheet molding compound is characteristic in that the viscosity at 25°C of the resin composition is 300 to 20000 mPa·s, the temperature Tc of the carbon fibers is 15°C to 115°C when inserted between the resin compositions on carrier films disposed on upper and lower sides, and the content of the carbon fibers in the sheet molding compound is 25% to 80% by mass.

Advantageous Effects of Invention

A sheet molding compound and a molded product thereof produced by the present invention have the excellent impregnation property into carbon fibers and thus can be preferably used for exteriors, structures, and the like of an automotive member, a railroad vehicle member, an aerospace vehicle member, a ship member, a housing equipment member, a sport member, a light vehicle member, a civil engineering and construction member, an OA equipment, etc.

Brief Description of Drawing

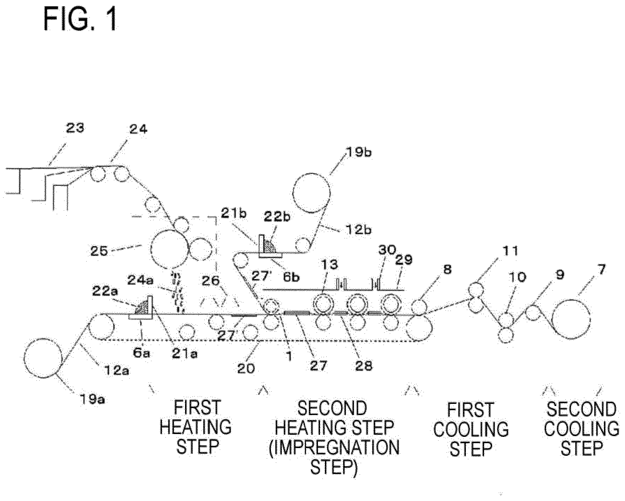

[Fig. 1] Fig. 1 is a schematic drawing showing steps for producing a sheet molding compound according to an embodiment of the present invention.

Description of Embodiments

A method for producing SMC of the present invention is a method for producing a sheet molding compound, including impregnating a resin composition into carbon fibers, in which the viscosity at 25°C of the resin composition is 300 to 20000 mPa·s, the temperature Tc of the carbon fibers is 15°C to 115°C when inserted between the resin compositions on carrier films disposed on upper and lower sides, and the content of the carbon fibers in the sheet molding compound is 25% to 80% by mass.

A general method for producing SMC is, for example, a method including coating a resin composition on carrier films disposed on upper and lower sides so that the thickness becomes uniform (coating step), spraying a fiber reinforcing material on one of the resin composition-coated surfaces (addition step), inserting the reinforcing material between the resin compositions on the carrier films disposed on upper and lower sides and then passing the whole between impregnation rollers and applying pressure to impregnate the resin composition into the fiber reinforcing material (impregnation step), and then winding into a roll shape or folding zigzag. However, in the SMC producing method of the present invention, the temperature Tc of the carbon fibers is 15°C to 115°C when inserted between the resin compositions on the carrier films disposed on upper and lower sides, thereby causing the excellent impregnation property of the resin composition into the carbon fibers.

In addition, besides the method using the impregnation rollers, for example, a press system, a mesh belt system, and the like can be applied as the impregnation method.

The steps for producing SMC and a flow of a SMC sheet 1 are described with reference to Fig. 1. A thermoplastic resin film having a thickness of 10 to 50 μm and drawn out by an unwinding device 19a is placed as a lower carrier film 12a on a transfer belt 20, and a resin composition 22a is coated in a predetermined thickness on the lower carrier film by using a resin coating device 21a provided with a doctor blade or the like.

The resin composition 22a is coated so as to be located about 30 to 60 mm inside the width of the lower carrier film for preventing the coating width from projecting from both sides of the lower carrier film 12a. In addition, a guide roll of the transfer belt is properly disposed on the inside of the transfer belt 20.

A thermoplastic resin film such as a generally used polyethylene or polyethylene terephthalate film may be used as a material of the lower carrier film 12a, and a polypropylene film is preferably used.

The resin composition 22a is a paste-like material prepared by properly mixing a thermosetting resin as a main component, such as an epoxy resin, an unsaturated polyester resin, a vinyl ester resin, or the like, with a filler, a thickener such as a thermoplastic resin powder or the like, a curing catalyst, an internal release agent, a shrinkage-reducing agent, a coloring agent, and the like.

On the other hand, with respect to the carbon fibers impregnated with the resin composition 22a, for example, plural bundles of strands 24 are sent from roving 23 into a cutting device 25 and then scattered and deposited so as to be uniformly dispersed as carbon fiber cut pieces 24a of about 1/16 to 1.5 inches on the resin composition 22a.

Further, a thermoplastic resin film such as a polyethylene film having a thickness of 10 to 50 μm or the like is drawn out as an upper carrier film 12b by an unwinding device 19b, and the same resin composition 22b as the resin composition 22a is coated in a predetermined thickness on the upper carrier film 12b by a resin coating device 21b provided with a doctor blade or the like, and is disposed on the carbon fiber cut pieces 24a so as to be in contact therewith. Also in this case, the resin composition 22b is coated so as to be located about 30 to 60 mm inside the upper carrier film 12b for preventing the coating width from projecting from both sides of the upper carrier film 12b.

The SMC sheet 1 obtained as described above has the layer configuration of the lower carrier film 12a/the resin composition 22a/the carbon fiber cut pieces 24a/the resin composition 22b/the upper carrier film 12b.

The thickness of a portion excluding both carrier films 12a and 12b is about 5 to 10 mm, and as shown in Fig. 1, the whole is sent to an impregnation device 13 in a subsequent step in which it is passed through plural impregnation rollers 14 having various surface groove shapes and defoamed while being impregnated with the resin composition 22a so that the carbon fiber cut pieces 24a are sufficiently wet, and further surface-smoothed, thereby producing the SMC sheet 1 of about 2 mm.

In addition, in order to more improve the impregnation property, the SMC producing method of the present invention preferably satisfies the following conditional expressions (a) and (b).

$$\text{(a)} \quad 15 < Tc \times Wc + Tr \times Wr < 180$$

$$\text{(b)} \quad Tr < 110$$

(Wherein Tc is the carbon fiber temperature (°C) when the carbon fibers are inserted between the resin compositions on the carrier films disposed on upper and lower sides, Tr is the resin composition temperature (°C) when the carbon fibers are inserted between the resin compositions on the carrier films disposed on upper and lower sides, Wc is the content (% by mass) of the carbon fibers in the sheet molding compound, and Wr is the content (% by mass) of the resin composition in the sheet molding compound.)

In addition, Tc and Tr are the temperatures at the time of insertion between the resin compositions on the carrier films disposed on upper and lower sides, and are thus the temperatures immediately before the impregnation step (immediately before the second heating step). When an interval occurs between the time of insertion between the resin compositions on the carrier films disposed on upper and lower sides and the start of the impregnation step, the surface temperature of the SMC sheet is Tr, and the carbon fiber temperature of a central portion in the thickness direction is Tc, measured by an ultra-fine coated thermocouple or the like.

Further, because the impregnation property is more improved, and the outflow of the resin from the side portion is suppressed, the SMC producing method of the present invention preferably includes a step (first heating step) of heating the resin composition and the carbon fibers before impregnation of the carbon fibers, and a step (second heating step) of heating a mixture of the resin composition and the carbon fibers during impregnation.

Also, because stepwise cooling is done and thus can suppress the occurrence of wrinkles or the like due to the rapid shrinkage of the SMC sheet and the carrier film, the SMC producing method of the present invention preferably includes a step (first cooling step) of cooling after the impregnation step and a step (second cooling step) of cooling in the production end stage.

In the first heating step, at the temperature immediately before impregnation, the resin is most impregnated when the thickness of a deposit (about 5 to 10 mm) of the carbon fiber cut pieces 24a is crushed and reduced (about 3 to 8 mm) by compressing the deposit of the carbon fiber cut pieces 24a using the impregnation rollers or the like. Therefore, in the first heating step, the carbon fibers and the resin composition are preferably heated sufficiently, and the temperature is preferably higher than that in the second heating step because.

Examples of the heating method include a contact heating method and a noncontact heating method, and any one of these may be used.

Examples of the contact heating method include a metal-made plate or arc heating through a heat source such as vapor, water, oil, or the like, induction heating, dielectric heating, resistance heating, and the like, and resistance heating is preferred from the viewpoint of ease of industrialization and ease of control.

Examples of the resistance heating include heating by a sheath heater, a cartridge heater, a square coil heater, a micro (capillary) heater, a mica heater, a (silicone) rubber heater, or the like, and a rubber heater or heating by a metal-made plate through each of the heat sources is preferred from the viewpoint of ease of execution and ease of control because of the thin thickness.

Examples of the noncontact heating method include radiant heat from a metal-made plate or the like through a heat source such as infrared light, microwaves, halogen, vapor/water/oil, or the like, resistance heating, highfrequency induction heating, electron beam (EB) heating, hot air heating, and the like, and infrared light and hot-air heating are preferred from the viewpoint of the ability of rapid heating and ease of industrialization.

The carbon fibers are preferably heated by the noncontact heating method before the impregnation step because the carbon fibers are possibly not flowed when in contact with a heating body and SMC having a desired content of carbon fibers can be easily obtained.

The noncontact heating method is preferably infrared light heating because the carbon fibers can be selectively heated, and infrared light at a wavelength of 1 to 40 $\mu$m is preferred, and infrared light at a wavelength of 1 to 25 $\mu$m is particularly preferred.

The carbon fiber temperature Tc is 15°C to 115°C, but is preferably 20°C to 110°C and more preferably 25°C to 100°C because even at a high carbon fiber content, fluidity of the resin between the carbon fibers is more improved, and the impregnation property is more improved. With a temperature of lower than 15°C, permeation of the resin between the carbon fibers and in the thickness direction becomes insufficient, while with a temperature exceeding 115°C, the temperature of the resin is increased due to the large influence of the temperature on the resin, and thus the viscosity is increased due to curing reaction, thereby decreasing the impregnation property.

When the resin in the resin compositions 22a and 22b is heated, the resin can be previously heated. When the resin is previously heated, the amount of heating in the subsequent step can be effectively decreased.

Because of efficiency due to a small amount of heating in the subsequent step, the resin composition temperature Tr is preferably 10°C or more, more preferably 15°C or more, and still more preferably 20°C or more. In addition, because of a small increase in viscosity by curing reaction and more excellent impregnation property, the temperature Tr is preferably 80°C or less, more preferably 70°C or less, and still more preferably 60°C or less.

The lower carrier film 12a/the resin composition 22a and the resin composition 22b/the upper carrier film 12b can be heated by a rubber heater 27', and the carbon fiber cut pieces 24a can be heated by a far-infrared heater 26.

The second heating step includes heating in the step of impregnating the SMC sheet 1, and any one of contact heating and noncontact heating can be applied. As shown in Fig. 1, for example, a hot air heating 29 and a rubber heater 28 can be applied, but not particularly limited thereto.

In the second heating step, the temperature of the SMC sheet 1 is preferably 10°C to 80°C, more preferably 15°C to 70°C, and particularly preferably 20°C to 60°C. With the temperature of lower than 10°C, the amount of heat in the subsequent step becomes large, and thus efficiency deteriorates, while with the temperature higher than 60°C, the curing reaction is started to increase the viscosity, and thus the impregnation property undesirably deteriorates.

The SMC sheet 1 is heated by the rubber heater 27 (in Fig. 1, two rubber heaters are used while the sheet is passed therebetween in contact therewith) or the like.

The first cooling step is a step of cooling by cooling rollers 8 and 11 through which air and cooling water are passed, and cooling rollers 9 and 10 using heat radiation by a metal.

The SMC sheet 1 after the first cooling step is preferably at 5°C to 60°C, more preferably at 10°C to 50°C, and particularly preferably at 10°C to 40°C. The temperature lower than 5°C possibly causes tearing of the carrier films or the like, while the temperature higher than 60°C possibly undesirably causes the resin composition to flow out from the reinforced fibers when wound in a roll shape or folded. In addition, effective cooling can be performed at a wind speed of 0.1 m/sec or more. The wind speed can be adjusted by an air conditioner, a blower, or the like.

The second cooling step is performed after the SMC roller 7, and cooling is performed by, for example, a low-temperature constant bath, air cooling, or air conditioning. The temperature is preferably 5°C to 40°C, more preferably 5°C to 30°C, and particularly preferably 10°C to 25°C. The temperature lower than 5°C possibly causes tearing of the carrier films or the like during transport, while the temperature higher than 40°C possibly undesirably causes the resin composition to flow out from the reinforced fibers when wound in a roll shape or folded. In addition, effective cooling can be performed at a wind speed of 0.1 m/sec or more. The wind speed can be adjusted by an air conditioner, a blower, or the like.

Examples of the resin in the resin composition include thermosetting resins such as an epoxy resin, a vinyl ester resin, a vinyl urethane resin, an unsaturated polyester resin, a phenol resin, a melamine resin, a furan resin, and the like, and from the viewpoint of the mechanophysical properties such as strength after molding, an epoxy resin and a vinyl ester resin, and a vinyl urethane resin are more preferred. These resins can be used alone or in combination of two or more.

The resin composition can contain, as components other than the resin, for example, a diluent, a curing agent, a curing accelerator, a polymerization inhibitor, a filler, a low shrinkage agent, thermoplastic resin particles, a release agent, a thickener, a viscosity-reducing agent, a pigment, an antioxidant, a plasticizer, a flame retardant, an antibacterial agent, an ultraviolet stabilizer, a storage stabilizer, a reinforcing material, a photocuring agent, and the like.

Examples of the filler include an inorganic compound and an organic compound, and it can be used for adjusting the physical properties of a molded product, such as strength, elastic modulus, impact strength, fatigue durability, etc.

Examples of the inorganic compound include calcium carbonate, magnesium carbonate, barium sulfate, mica, talc, kaolin, clay, zeolite, asbestos, pearlite, baryta, silica, quartz sand, dolomite limestone, plaster, aluminum fine powder, hollow balloon, alumina, glass powder, aluminum hydroxide, whitish marble, zirconium oxide, antimony trioxide, titanium oxide, molybdenum dioxide, iron powder, and the like.

Examples of the organic compound include natural polysaccharide powders of cellulose, chitin, and the like; synthetic resin powders, and the like, and usable examples of the synthetic resin powders include an organic powder composed of a hard resin, a soft rubber, an elastomer, or a polymer (copolymer), and particles having a multilayer structure such as a core-shell type or the like. Specific examples thereof include particles composed of butadiene rubber and/or acrylic rubber, urethane rubber, silicone rubber, or the like, a polyimide resin powder, a fluorocarbon resin powder, a phenol resin powder, and the like. These fillers can be used alone or in combination of two or more.

Examples of the release agent include zinc stearate, calcium stearate, paraffin wax, polyethylene wax, Carnouba wax, a fluorine-based compound, and the like. A fluorine-based compound and paraffin wax are preferred. These release agents can be used alone or in combination of two or more.

Examples of the thickener include metal oxides and metal hydroxides such as magnesium oxide, magnesium hydroxide, calcium oxide, calcium hydroxide, and the like; acrylic resin-based fine particles; and the like, and it can be properly selected according to the handleability of a fiber-reinforced molding material of the present invention. These thickeners can be used alone or in combination of two or more.

The resin composition can be produced by mixing/dispersing the components described above by using a mixer such as a general mixer, an inter-mixer, a planetary mixer, a roll mill, a kneader, an extruder, or the like.

For example, fibers cut into a length of 2.5 to 50 mm are used as the carbon fibers, but fibers cut into 5 to 40 mm are more preferred because the in-mold fluidity during molding and the appearance and mechanophysical properties of a molded product are more improved.

Usable examples of the carbon fibers include various types such as a polyacrylonitrile type, a pitch type, a rayon type, and the like, and among these, the polyacrylonitrile type is preferred because high-strength carbon fibers can be easily obtained.

In addition, the number of filaments of fiber bundles used as the carbon fibers is preferably 1,000 to 60,000 because the resin impregnation property and the mechanophysical properties of a molded produce are more improved.

The content of the carbon fibers in the components of the SMC of the present invention is preferably within a range of 35% to 80% by mass, more preferably within a range of 40% to 70% by mass, and particularly preferably within a range of 45% to 65% by mass because the mechanophysical properties of the resultant molded product are more improved. With an excessively low content of the fiber reinforcing material, a high-strength molded product is possibly not obtained, while with an excessively high content of the fiber reinforcing material, swelling of the molded product possibly occurs due to the insufficient resin impregnation property into the fiber reinforcing material, and thus the high-strength molded product is possibly not obtained.

Because the outflow of the resin from the ends of the SMC sheet is suppressed, and the reinforced fibers have the excellent impregnation property, the viscosity at 25°C of the resin composition of the present invention is preferably 3000 to 20000 mPa·s, more preferably 1000 to 17000 mPa·s, and more preferably 2000 to 15000 mP.

In addition, the carbon fibers in the SMC of the present invention are preferably impregnated with the resin in a state where the fibers are in random directions.

A method for producing a molded product of the present invention is a method of molding the SMC produced by the production method described above, and a molding method is preferably heat compression molding from the viewpoint of excellent productivity and excellent design diversity.

A method for producing a molded product, used for the heat compression molding, for example, includes weighing a predetermined amount of the SMC, adding the SMC into a mold previously heated to 110°C to 180°C, clamping the mold by a compression molding machine to shape the molding material, curing the molding material by holing a molding pressure of 0.1 to 30 MPa, and then taking out the resultant molded product. The specific molding conditions are preferably molding conditions in which a molding pressure of 1 to 20 MPa is held in the mold at a mold temperature of 120°C to 160°C for 1 to 5 minutes per mm of the thickness of the molded product, and are more preferably molding conditions in which because the productivity is more improved, a molding pressure of 1 to 20 MPa is held in the mold at a mold temperature of 140°C to 160°C for 1 to 3 minutes per mm of the thickness of the molded product.

The SMC of the present invention has excellent productivity and moldability, etc., and the resultant molded product can be preferably used for casings and the like of an automotive member, a railroad vehicle member, an aerospace vehicle member, a ship member, a housing equipment member, a sport member, a light vehicle member, a civil engineering and construction member, an OA equipment, etc.

EXAMPLES

The present invention is described in further detail below using examples, but the present invention is not limited to these examples. In addition, the viscosity of an epoxy resin is the viscosity at 25°C measured by using an E-type viscometer (TV-22 manufactured by Toki Sangyo Co., Ltd.).

(EXAMPLE 1)

A resin composition (1) was prepared by mixing, by three rollers, 40 parts by mass of epoxy resin (1) ("tetraglycidyl diaminodiphenylmethane" manufactured by Sigma Aldrich Co., LLT, epoxy equivalent: 110 to 130 g/eq, tetrafunctional aromatic epoxy resin), 40 parts by mass of epoxy resin (2) ("EPICLON 840LV" manufactured by DIC Corporation, bisphenol A-type, epoxy equivalent: 178 g/eq, number of functional groups: 2), 5 parts by mass of an epoxy diluent ("XY-622" manufactured by ANHUI XINYUAN Chemical Co., Ltd., 1,4-butanediol diglycidyl ether, epoxy equivalent: 131 g/eq, number of functional groups: 2), 15 parts by mass of an epoxy diluent ("EX-313" manufactured by Nagase & Co., Ltd., glycerol polyglycidyl ether, number of functional groups: 2 or more), 2 parts by mass of an internal release agent ("FB-962" manufactured by Daikin Industries, Ltd.), 8 parts by mass of an epoxy resin curing agent ("DICY7" manufactured by Mitsubishi Chemical Corporation, dicyandiamide), and 5 parts by mass of a curing accelerator ("B-605-IM" manufactured by DIC Corporation, alkylurea type), and also mixing 9 parts by mass of thermoplastic resin particles ("F303" manufactured by Aika Industry Co., Ltd., poly(meth)acrylate ester-based organic fine particles).

[Formation of SMC]

The resin composition (1) prepared as described above was coated on a laminate film of polyethylene and polypropylene so that the coating amount was 860 $g/m^2$ on average, and carbon fibers (abbreviated as "carbon fibers (1)" hereinafter) produced by cutting a carbon fiber roving ("T700SC-12000-50C" manufactured by Toray Industries, Inc.) into 12.5 mm were uniformly dropped from the air on the laminate film so that the thickness was uniform without fiber directivity, and the carbon fiber content was 57% by mass. The carbon fibers were sandwiched between the laminate film and a film, on which the resin composition (1) had been coated similarly with the above method, to impregnate the carbon fibers (1) with the resin and then allowed to stand at 80°C for 2 hours, to produce SMC (1). The basis weight of the SMC was 2 $kg/m^2$. In addition, the atmosphere temperature, a rubber heater, a heating plate, and a far-infrared heater were adjusted so that the carbon fiber temperature Tc and the resin composition temperature Tr were 17°C, and a hot air device was adjusted so that the temperature in the second heating step (surface temperature of the SMC sheet at the intermediate time in the step) was 35°C, the temperature in the first cooling step was 28°C (surface temperature of the SMC sheet at the intermediate time in the step), and the temperature in the second cooling step was 23°C (surface temperature of the SMC sheet at the intermediate time of the step), thereby forming the SMC sheet as described above.

[Evaluation of impregnation property of SMC]

The SMC was divided into two portions at the middle line between a line parallel to the surface and a line parallel to the back as viewed from the cross-sectional direction of the SMC, exposing the inside of the SMC. Next, 30 carbon fiber bundles per 30 cm were randomly taken out from the bundles present in the surface of the exposed inside, and the masses thereof were measured, and an average value was calculated. This was repeated at 5 portions, and the fiber mass after impregnation was measured. The fiber mass after impregnation was compared with the unimpregnated fiber mass to evaluate the impregnation property according to criteria below. The unimpregnated fiber mass was determined by measuring the masses of 1000 carbon fibers cut into 12.5 mm and calculating an average. The mass was measured by using an analytical electronic balance GR-202 (manufactured by A & D Company, Limited, weighing unit: 0.01 mg) .

5: The fiber mass after impregnation is increased by 40% or more as compared with the unimpregnated fiber mass.
4: The fiber mass after impregnation is increased by 20% or more and less than 40% as compared with the unimpregnated fiber mass.
3: The fiber mass after impregnation is increased by 10% or more and less than 20% as compared with the unimpregnated fiber mass.
2: The fiber mass after impregnation is increased by 3% or more and less than 10% as compared with the unimpregnated fiber mass.
1: The fiber mass after impregnation is increased by less than 3% as compared with the unimpregnated fiber mass or the outflow of only the resin from the ends of the SMC sheet is 30 mm or more.

[Formation of molded product]

The SMC (1) produced as described above was pressure-molded at a charge ratio of 75% to the projected area of a 30 cm-square mold under the molding conditions including a mold temperature of 140°C, a pressure time of 5 minutes, and an applied pressure of 10 MPa, thereby producing a molded product (1) having a sheet thickness of 2 mm.

[Evaluation of impregnation property of molded product]

A section of the molded product (1) produced as described above was observed with a magnification rate of 50 times by using digital microscope VHX-5000 (manufactured by Keyence Corporation) to evaluate the impregnation property according to criteria below. The observation was performed for sections (a total of two directions with a length of 300 mm) in two directions, any desired direction and a direction perpendicular thereto.

5: The number of unimpregnated regions is 2 or less.
4: The number of unimpregnated regions is 3 to 4 or less.
3: The number of unimpregnated regions is 5.
2: The number of unimpregnated regions is 6 to 10.
1: The number of unimpregnated regions is 11 or more.

(EXAMPLES 2 to 6)

SMC (2) to (6) and molded products (2) to (6) were produced by the same method as in Example 1 except that the impregnation conditions were as shown in Table 1, and each of the evaluations was performed. A SMC sheet was formed under the conditions shown in Table 1, which were set by adjusting the atmosphere temperature, the rubber heater, the heating plate, and the far-infrared heater.

[Table 1]

| Table 1 | Example 1 | Example 2 | Example 3 | Example 4 | Example 5 | Example 6 |
|---|---|---|---|---|---|---|
| Carbon fiber temperature Tc (°C) | 17 | 23 | 17 | 86 | 40 | 60 |
| Resin composition temperature Tr (°C) | 17 | 17 | 20 | 78 | 52 | 40 |
| Tc×Wc+Tr×Wr (°C) | 17 | 20 | 18 | 83 | 45 | 51 |
| Viscosity at 25°C of resin composition (mPa·s) | 6480 | 6480 | 6480 | 6480 | 6480 | 6480 |
| Carbon fiber content Wc (% by mass) | 57 | 57 | 57 | 57 | 57 | 57 |
| Impregnation property of SMC | 3 | 4 | 3 | 4 | 5 | 5 |
| Impregnation property of molded product | 5 | 5 | 5 | 5 | 5 | 5 |

(EXAMPLES 7 and 8)

A resin composition was prepared by the same method as in Example 1 except using 35 parts by mass of epoxy resin (1), 35 parts by mass of epoxy resin (2), 10 parts by mass of the epoxy diluent ("XY-622"), and 20 parts by mass of the epoxy diluent ("EX-313"). Further, a SMC sheet was obtained by using carbon fibers at Wc shown in Table 2. In addition, the SMC sheet was formed as shown in Table 2 by adjusting the atmosphere temperature, the rubber heater, the heating plate, and the far-infrared heater.

(COMPARATIVE EXAMPLES 1 to 3)

SMC (R1) to (R3) and molded products (R1) to (R3) were produced by the same method as in Example 1 except that the impregnation conditions were as shown in Table 2, and each of the evaluations was performed. A SMC sheet was formed as shown in Table 2 by adjusting the atmosphere temperature, the rubber heater, the heating plate, and the far-infrared heater.

(COMPARATIVE EXAMPLE 4)

A resin composition was prepared by the same method as in Example 1 except using 35 parts by mass of epoxy resin (1), 35 parts by mass of epoxy resin (2), 10 parts by mass of the epoxy diluent ("XY-622"), and 20 parts by mass of the epoxy diluent ("EX-313"). Further, a SMC sheet was obtained by using carbon fibers at Wc shown in Table 2. In addition, the SMC sheet was formed as shown in Table 2 by adjusting the atmosphere temperature, the rubber heater, the heating plate, and the far-infrared heater.

(COMPARATIVE EXAMPLE 5)

A resin composition was prepared by the same method as in Example 1 except using 87 parts by mass of epoxy resin (2), 10 parts by mass of the epoxy diluent ("XY-622"), and 3 parts by mass of the epoxy diluent ("EX-313"). Further, a SMC sheet was obtained by using carbon fibers at Wc shown in Table 1. In addition, the SMC sheet was formed as shown in Table 1 by adjusting the atmosphere temperature, the rubber heater, the heating plate, and the far-infrared heater.

[Table 2]

| Table 2 | Example 7 | Example 8 | Comparative Example 1 | Comparative Example 2 | Comparative Example 3 | Comparative Example 4 | Comparative Example 5 |
|---|---|---|---|---|---|---|---|
| Carbon fiber temperature Tc (°C) | 60 | 60 | 9 | 118 | 9 | 60 | 60 |
| Resin composition temperature Tr (°C) | 40 | 40 | 9 | 9 | 115 | 40 | 40 |
| Tc×Wc+Tr×Wr (°C) | 52 | 48 | 9 | 71 | 55 | 46 | 52 |
| Viscosity at 25°C of resin composition (mPa·s) | 2810 | 2810 | 6480 | 6480 | 6480 | 2810 | 287 |
| Carbon fiber content Wc (% by mass) | 60 | 42 | 57 | 57 | 57 | 30 | 60 |
| Impregnation property of SMC | 5 | 5 | 1 | 2 | 2 | 1 | 1 |
| Impregnation property of molded product | 5 | 5 | 1 | 2 | 2 | 1 | 1 |

It was confirmed that the SMC and molded products produced by the production method of the present invention in Examples 1 to 8 are excellent in impregnation property.

On the other hand, Comparative Examples 1 and 3 are examples in which the carbon fiber temperature Tc is lower than 15°C as the lower limit of the present invention, and it was confirmed that the impregnation property is poor because of impregnation in a state where the resin composition has high viscosity.

Comparative Example 2 is an example in which the carbon fiber temperature Tc is higher than 115°C as the upper limit of the present invention, and it was confirmed that the impregnation property is poor because the curing reaction proceeds to increase viscosity and thus the resin does not flow between the carbon fibers.

Comparative Example 4 is an example in which the content Wc of the carbon fibers is lower than 35% by mass at the lower limit of the present invention, and it was confirmed that the outflow of only the resin from the ends of the SMC sheet is 30 mm or more.

Comparative Example 5 is an example in which the viscosity of the resin composition is lower than 300 mPa·s at the lower limit of the present invention, and it was confirmed that the outflow of only the resin at the side of the SMC sheet is 30 mm or more.

Reference Signs List

| | |
|---|---|
| 7 | SMC sheet roll |
| 8, 9, 10, 11 | cooling roller |
| 1 | SMC sheet |
| 12 | carrier film |
| 13 | impregnation device |
| 14 | impregnation roller |
| 19 | unwinding device |
| 20 | transfer belt |
| 21 | resin coating device |
| 22 | resin composition |
| 23 | roving |
| 6 | heating plate |
| 24 | strand |
| 24a | carbon fiber cut piece |
| 25 | cutting device |
| 26 | infrared heater |
| 27 | rubber heater (2 heaters) |
| 27' | rubber heater (1 heater) |
| 28 | rubber heater (2 heaters) |
| 29 | hot air device |
| 30 | hot air flow inlet |

**Claims**

1. A method for producing a sheet molding compound, comprising impregnating a resin composition into carbon fibers, wherein the viscosity at 25°C of the resin composition is 300 to 20000 mPa·s, the temperature Tc of the carbon fibers is 15°C to 115°C when inserted between the resin compositions on carrier films disposed on upper and lower sides, and the content of the carbon fibers in the sheet molding compound is 35% to 80% by mass.

2. The method for producing a sheet molding compound according to Claim 1, wherein conditional expressions (a) and (b) below are satisfied,

$$(a) \quad 15 < Tc \times Wc/100 + Tr \times Wr/100 < 180$$

$$(b) \quad Tr < 110$$

(wherein Tc is the carbon fiber temperature (°C) when the carbon fibers are inserted between the resin compositions on the carrier films disposed on upper and lower sides, Tr is the resin composition temperature (°C) when the carbon fibers are inserted between the resin compositions on the carrier films disposed upper and lower sides, Wc is the content (% by mass) of the carbon fibers in the sheet molding compound, and Wr is the content (% by mass) of the resin composition in the sheet molding compound).

3. A method for producing a molded product, comprising molding a sheet molding compound produced by the production method according to Claim 1 or 2.

EP 4 067 036 A1

FIG. 1

FIRST HEATING STEP

SECOND HEATING STEP (IMPREGNATION STEP)

FIRST COOLING STEP

SECOND COOLING STEP

# EP 4 067 036 A1

**INTERNATIONAL SEARCH REPORT**

| International application No. |
|---|
| PCT/JP2020/042178 |

**A. CLASSIFICATION OF SUBJECT MATTER**
B29B 11/16(2006.01)i
FI: B29B11/16
According to International Patent Classification (IPC) or to both national classification and IPC

**B. FIELDS SEARCHED**

Minimum documentation searched (classification system followed by classification symbols)
B29B11/16

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2016/182077 A1 (MITSUBISHI RAYON CO., LTD.) 17 November 2016 (2016-11-17) claims, paragraphs [0197]-[0300], examples | 1-3 |
| X | JP 2019-167429 A (TEIJIN LTD.) 03 October 2019 (2019-10-03) claims, paragraphs [0111]-[0138], examples | 1-3 |
| X | JP 54-039469 A (TOHO BESLON CO., LTD.) 26 March 1979 (1979-03-26) claims, page 2, lower right column, line 17 to page 5, upper right column, line 15, examples, fig. 1-3 | 1-3 |
| X | WO 2019/017264 A1 (MITSUBISHI CHEMICAL CORPORATION) 24 January 2019 (2019-01-24) claims, paragraphs [0081]-[0117], examples, fig. 1 | 1-3 |
| A | WO 2017/160621 A1 (MITSUBISHI CHEMICAL CORPORATION) 08 September 2017 (2017-09-08) claims, examples, entire text | 1-3 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 January 2021 (05.01.2021) | 19 January 2021 (19.01.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

Information on patent family members

| International application no. |
|---|
| PCT/JP2020/042178 |

| Patent Documents referred in the Report | Publication Date | Patent Family | Publication Date |
|---|---|---|---|
| WO 2016/182077 A1 | 17 Nov. 2016 | JP 2018-16820 A<br>US 2018/0142057 A1<br>claims, paragraphs [0249]-[0488], examples<br>JP 2020-73698 A<br>US 2020/0055978 A1<br>EP 3296359 A1<br>CN 107531985 A<br>CN 109320914 A | |
| JP 2019-167429 A | 03 Oct. 2019 | (Family: none) | |
| JP 54-039469 A | 26 Mar. 1979 | (Family: none) | |
| WO 2019/017254 A1 | 24 Jan. 2019 | US 2020/0131297 A1<br>claims, paragraphs [0227]-[0306], examples, fig. 1<br>EP 3656806 A1<br>CN 111094412 A | |
| WO 2017/150521 A1 | 08 Sep. 2017 | US 2020/0140633 A1<br>claims, examples<br>EP 3425005 A1<br>CN 108603009 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004035714 A